# EUROPEAN PATENT SPECIFICATION

(11) **EP 0 761 067 B1**
(45) Date of publication and mention of the grant of the patent: **02.09.1998**
(21) Application number: 95919584.3
(22) Date of filing: 26.05.1995
(51) Int. Cl.: H04Q 7/22, H04Q 7/38

(54) **CONNECTION RELEASE IN A TELECOMMUNICATIONS SYSTEM**
VERBINDUNGSAUFLÖSUNG IN EINEM FERNSPRECHSYSTEM
LIBERATION D'UNE CONNEXION DANS UN SYSTEME DE TELECOMMUNICATIONS

(30) Priority: 27.05.1994 EP 94303839
(43) Date of publication of application: 12.03.1997
(73) Proprietor: BRITISH TELECOMMUNICATIONS public limited company, London EC1A 7AJ (GB)
(72) Inventor: CHOTAI, Sunil, Suffolk IP5 7SJ (GB)
(74) Representative: Lidbetter, Timothy Guy Edwin
(86) International application number: GB9501218
(87) International publication number: WO9533347

(56) References cited:
- WO-A-93/18606
- PATENT ABSTRACTS OF JAPAN vol. 007 no. 247 (E-208) ,2 November 1983 & JP,A,58 134542 (NIPPON DENSHIN DENWA KOSHA) 10 August 1983,
- PATENT ABSTRACTS OF JAPAN vol. 005 no. 099 (E-063) ,26 June 1981 & JP,A,56 043838 (NIPPON TELEGR & TELEPH CORP) 22 April 1981,
- PATENT ABSTRACTS OF JAPAN vol. 005 no. 192 (E-085) ,8 December 1981 & JP,A,56 115046 (NIPPON TELEGR & TELEPH CORP) 10 September 1981,
- PATENT ABSTRACTS OF JAPAN vol. 017 no. 535 (E-1439) ,27 September 1993 & JP,A,05 145964 (FUJITSU LTD;OTHERS: 01) 11 June 1993,
- ICC '79. INTERNATIONAL CONFERENCE ON COMMUNICATIONS, vol. 1, 10 June 1979 BOSTON, MA, US, pages 3.2.1-3.2.5, NACON ET AL. 'NEW CUSTOM CALLING SERVICES' cited in the application
- IEEE NETWORK, vol. 4, no. 6, November 1990 NEW YORK, US, pages 50-60, XP 000172742 FUJIOKA ET AL. 'Hierachical and Distributed Information Handling for UPT'

## Description

This invention relates to a telecommunications switching system, and in particular to the management, at the end of a transaction, of a communications link between a telephone terminal and the rest of the system. The invention is suitable for use in both fixed and cellular radio telecommunications systems.

The term 'transaction' is used in this specification to mean any communication between the telephone terminal and the rest of the system, including control functions such as mobile radio location updates in a cellular radio system, and also signals sent to the user e.g. to inform him that there is a message in a voice mailbox facility. The transactions may be call-independent (i.e. using only signalling connections and without the use of a traffic-bearing connection) or call-related (i.e. with use of a traffic-bearing connection).

A number of services are available from modern telecommunications systems to assist the maker of a failed call attempt. For example a message may be left for the unavailable user in a voice mailbox. It is known in such systems to alert the user, when he next uses his terminal or next finishes using it, to the presence of the message in the mailbox, so that he can contact the voice message centre and access the message. This may be done by, for example, a short ringing tone, typically 1/2 second, at the next call release. Examples of such arrangements are disclosed, for example in an article by R J Nacon and D P Worrall in the Proceedings of the International Conference on Communications 1979, Vol 1, (Boston, Massachusetts, USA) (page 3.2.3), and in European patent specification EP 0481683 (AT&T) (col 4-col 5).

Other services include a Call Completion to Busy Subscriber (CCBS) facility for notifying a calling party, having failed to get a reply, when a called party next makes a call, or completes a call which was in progress when the initial call attempt was made, so that the calling party can be notified that another call attempt is likely to succeed.

Another facility is the capability for transmission of data messages to a user, a facility referred to below as Short Message Service (SMS). The data messages may be used to control the user's terminal, e.g. to cause it to display a text message on a built-in display unit.

In known telecommunications systems, when the network recognises that a call has been terminated (normally by one of the parties to the call going "on-hook") the end-to-end connection is released. This then allows those network elements which were used by the call to be used by other resources. For example, in a cellular radio environment the radio channel allocated to a call is released so that it can be used by other mobile units to make or receive calls.

In conventional systems, when a call-related transaction (for example a speech or a data call) ends, a call control protocol first carries out message exchanges to clear the traffic-bearing connections. The signalling connections are then also released via appropriate message exchanges.

Similarly, when a non-call-related transaction (for example periodic location update in a cellular radio system) ends, the signalling connections are released via appropriate message exchanges.

If one of the services described above is in use there is a strong possibility that the terminal to which that service relates will be used for another transaction attempt (incoming or outgoing) shortly after the first one is completed, with its associated release of connections. If such an attempt takes place, the system must then re-establish the connection to perform the additional service. At busy times, the connection may no longer be available, having been seized by another terminal. This would lead, for example, to the 'Call Completion to Busy Subscriber' service failing, or appearing to the caller to do so, as the new call attempt would fail.

A number of systems have been developed in an attempt to resolve this problem. In particular, Patent Abstracts of Japan Vol 5 Nos 99 and 192, Vol 7 No 247 and Vol 17 No 535 all describe systems in which a call is established between two part-connections. Considering in particular the call completion service described in the first of these references, these connections are held open by the users themselves, who are instructed by the network not to hang up. This is inconvenient, firstly because in the case of the calling party the connection may need to be held open for a considerable time, until the called party completes his current transaction. More importantly, it requires the users to carry out unusual actions, in particular to remain off-hook at the end of a call. Even if users are given voice prompts, they cannot be relied upon to follow them correctly.

According to a first aspect of the invention, there is provided a telecommunications switching system for selectively interconnecting a plurality of network terminals, the switching system being arranged to establish communications links with individual network terminals so that transactions can be established to or from the terminals, and to release the communications links upon termination of the said transactions;
characterised in that the switching system includes indicating means (F) for each terminal, the indicating means being settable in response to activity by, or relating to, the respective terminal (B);
the switching system being responsive to the setting of the indicating means (F) to prevent release of all or part of a communications link;
such that a further transaction can be made to or from the respective terminal (B) using the same communications link or part thereof.

According to a second aspect of the invention, there is provided a method of operating a telecommunications system for selectively interconnecting a plurality of network terminals by establishing and releasing communications links with individual network terminals so that transactions can take place between the terminals; characterised in that
if switching activity takes place during a transaction by, or relating to, a terminal (B), such activity being indicative of a further transaction by, or relating to, the same terminal, to be attempted when the current transaction is completed, indicating means (F) are set in response to such activity; and wherein
at the end of a transaction, release of all or part of the communications link used by the transaction is controlled in response to the settings of the indicating means (F), such that the release is prevented and the further transaction can be made using the same communications link or part thereof.

By controlling the release entirely within the switching means, no unusual operations are required of the users themselves. The invention allows one end of the new connection to be maintained from its previous transaction whilst the connection to the other end is being established.

In a preferred embodiment the link is maintained for a predetermined delay period, which may be selectable according to the type of further transaction.

Preferably, the indicating means may be set in response to a text or voice message being stored in a message facility, or in response to an initial transaction attempt by a second terminal to which a signal is sent indicating that the first terminal has completed a transaction. The further transaction attempt to the network terminal may be a signal to the user indicating that the service has been activated (e.g. that a message is stored in a mailbox facility). It is advantageous if the link to be maintained for a predetermined delay period after the further transaction to the terminal, in order to allow the user to initiate a still further transaction from the terminal, as it is likely that the user, having been alerted to the activation of the service, will make a call attempt in order to operate it, (e.g. to access the mailbox).

The telecommunications system may be a cellular radio system. A typical cellular radio network comprises a plurality of mobile radio units which can each be put into radio communication with one of a plurality of fixed radio base stations, according to which base station can provide the best radio link. The establishment of radio links between base stations and mobile units is under the control of a mobile switching centre (MSC) which routes calls to and from units by way of the base stations. Should a mobile radio unit move relative to the radio base stations during a call, such that radio contact between the mobile unit and a first radio base station could be lost, the mobile switching centre establishes a new radio link between a second base station and the mobile unit and allows the first link to be dropped without interruption of the call. This process is known as handover.

In order to facilitate the establishment of radio links with the mobile units, cellular radio systems typically store data relating to the mobile units authorised to operate on the network. Two types of data store are used, known as the Home Location Register (HLR) and the Visitor Location Register (VLR). Each mobile switching centre (MSC) has a VLR which stores details of the mobile units currently under the control of that MSC. This includes any units which are switched on but not actively engaged in a transaction, and also units, currently switched off, whose most recent transaction was controlled by that MSC. The details include information concerning the current (or most recent) base station to which the mobile unit is operating, which allows the mobile unit to be located readily in order to establish an incoming call, and also allow speedy verification of the identity of a mobile unit should it initiate a transaction.

The HLR stores permanent details relating to the mobile unit, such as access rights and any number translation necessary to interpret incoming call requests. It also identifies the VLR on which the mobile unit is currently logged.

If the location of a mobile unit, on making contact with the network, is identified as not corresponding to that currently stored in the VLR, the information in the VLR is updated. Many networks have more than one MSC. Should the mobile unit's new location be under the control of an MSC other than that to which it was previously working, the mobile unit's details will not be found on the VLR. The VLR of the new MSC retrieves from the HLR the data it needs to identify the mobile unit. The HLR can then update its record of which VLR the mobile unit is working to, and causes the cancellation of the record in the old VLR. This location update may take place during the establishment of a call or in a periodic updating transaction.

In cellular systems the procedures required to establish or re-establish a connection are more complex than for a fixed system, as the location of the mobile unit has to be determined, and the unit has to be paged and its identity verified before establishing a radio link. Maintenance of the link between calls according to the method of the invention is therefore particularly advantageous in a cellular system. Moreover, it is more likely in a cellular system that any delay in reestablishing the line will lead to failure of the second transaction, as the mobile unit may have been switched off or moved out of range in the intervening period.

It is desirable for a user to be able to use the same mobile unit wherever he or she may be. However, no cellular radio network currently has worldwide coverage. They normally have coverage over a limited geographical area, typically corresponding to an individual nation. In order to allow a user to use the same mobile unit in territories covered by different operators' networks, 'roaming' arrangements are being established between a number of cellular radio operators. The roaming arrangements allow a user to connect to whichever network gives coverage locally, and allow the user to be recognised for authentication, call routing, and billing purpose as being a subscriber to his or her 'home' network. Roaming arrangements may also be used to allow a user to select between operators covering the same territory, for example to take advantage of the most favourable tariff.

The principle of roaming requires that each network's HLR can communicate with the VLRs of the other networks participating in the roaming arrangement, so that a mobile unit can be correctly identified when it makes contact with any of the networks, and can be located for the purpose of routing incoming calls when it is not in its 'home' network.

The cellular radio system standard known as GSM (Global System for Mobile Communications) is designed to support roaming and also a number of extra telecommunications services. One such service is a voice message service (VMS) which allows the maker of a failed call attempt to leave a message for called party for subsequent retrieval. The message is stored in a voice message centre (VMC) associated with the called party's HLR. In order that the user of the mobile unit is alerted to the presence of a message in the VMC, the user's record in the HLR is flagged so that when the user next makes contact with the network the signal is transmitted to mobile unit to alert the user to the presence of a message. Short Message Service (SMS) and Call Completion to Busy Subscriber (CCBS) are also offerd by GSM.

Different network operators in a roaming agreement can offer different enhanced services, even though for basis call establishment they are compatible.

In the GSM standard the indicators used to control these services are stored in the user's HLR. This can result in a significant signalling penalty if the user is currently in contact with another operators' network, under a roaming arrangement, since the necessary signalling to operate the service must travel via the HLR, which may be in a different country or even a different continent. It does, however, ensure that if the user moves to an area controlled by another switching centre, the information is not lost, as the user is always associated with the same HLR. If the service is not available from the new switching centre, the indicator remains set in the HLR until the user returns to the original switching centre, or another which supports the service, or until the indicator times-out.

This arrangement is highly inefficient in signalling, as the user's current switching centre must obtain and update data from the user's HLR, which may be on the other side of the world, even though the service is being used in connection with local calls. This can add a significant overhead to the operators' costs.

This problem can be avoided by arranging that when communication with a network terminal is transferred from a first switching centre to a second switching centre the setting of the indicating means associated with the first switching centre is transmitted to the indicating means associated with the second switching centre.

This marks a departure from the present GSM procedures. In the GSM system, when a mobile switching centre (MSC) surrenders control of a mobile unit, the record of the mobile unit in the associated register (VLR) is deleted by the 'cancel location' signal transmitted from the users' HLR. However, in this invention, the information is transferred from the register associated with one switching centre to the register associated with the other switching centre by returning data to the new VLR by way of the HLR.

The use of data transfer in roaming has application for data other than the further transaction indicators discussed above, and is covered in the Applicants' co-pending application claiming the same priority date as the present application (WO95/01219).

A problem could arise if the new switching centre is not capable of supporting the service to which the data relates. In this case the data could be lost since the new register cannot store it and it has been deleted from the original register, so that when the user returns to control by the original switching centre, or some other switching centre capable of supporting the service, the service cannot be activated. Therefore, a message could remain stored in the users Voice Message Centre but no alert would be given to the user, Similarly the CCBS service could fail.

In a preferred arrangement therefore, if communication with a network terminal is first transferred to a further switching centre not having an associated indicating means capable of storing the setting, the setting is stored in a buffer register, and when communication with the network terminal is transferred to the second switching centre, the setting is transmitted to the indicating means associated with said second switching centre. It will be appreciated that in this situation, the first and second switching centres may be one and the same.

In a preferred embodiment the link is maintained for a predetermined delay period, which may be selectable according to the type of further transaction.

Preferably, the indicating means may be set in response to a text or voice message being stored in a message facility, or in response to an initial transaction attempt by a second terminal to which a signal is sent indicating that the first terminal has completed a transaction. The further transaction attempt to the network terminal may be a signal to the user indicating that the service has been activated (e.g. that a message is stored in a mailbox facility). It is advantageous for the link to be maintained for a predetermined delay period after the further transaction to the terminal, in order to allow the user to initiate a still further transaction from the terminal, as it is likely that the user, having been alerted to the activation of the service, will make a call attempt in order to operate it, (e.g. to access the mailbox).

Preferred embodiments of the invention will now be described by way of example with reference to the accompanying drawings, in which:
- Figure 1 shows the elements of a telecommunications system incorporating the invention.
- Figure 2 is a diagram showing how the system of figure 1 functions to support a CCBS service.
- Figure 3 is a diagram showing how the system of figure 1 functions to support an SMS service.
- Figure 4 is a diagram showing how the system of figure 1 functions to support a VMS service.
- Figure 5 is a diagram illustrating the transfer of data between control centres.

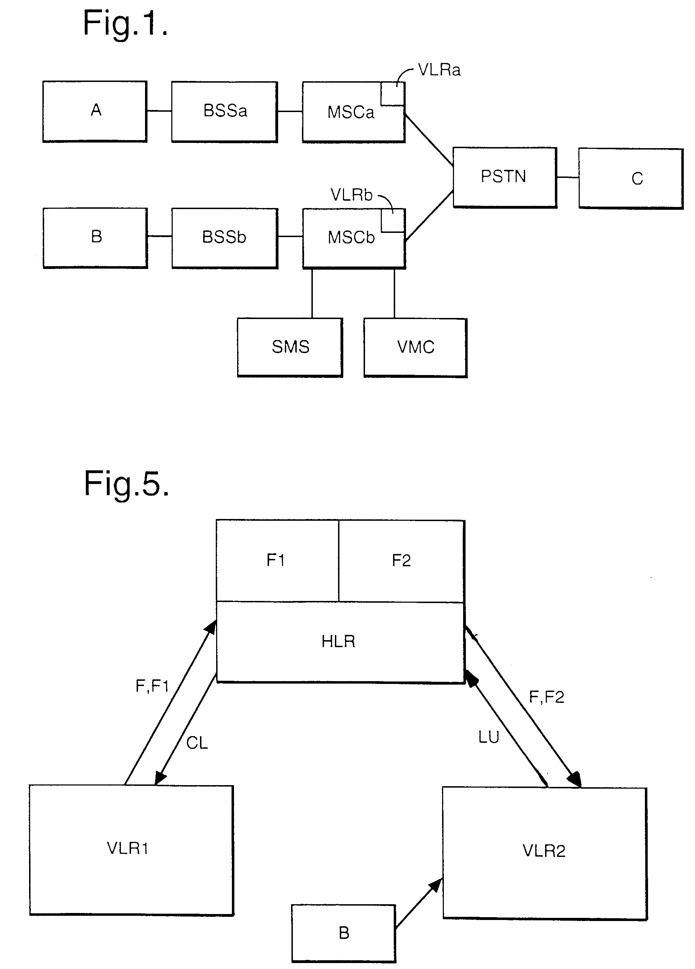

Figure 1 shows a simple cellular radio system comprising two mobile switching centres MSCa, MSCb, which are interconnected with each other and with the public switched telephone network (PSTN), and thereby with fixed users such as a terminal C. The mobile switching centres MSCa, MSCb each have associated with them a respective visitor location register VLRa, VLRb, which store data relating to those mobile units currently registered with the respective mobile switching centres MSCa, MSCb. Associated with the mobile switching centre MSCb there are also the systems necessary to store messages: a voice message centre VMC, and a short message service SMS. Similar arrangements (not shown) can be made for the other mobile switching centre MSCa. Each mobile switching centre MSCa, MSCb controls a respective base station system BSSa, BSSb. Mobile units A and B may communicate with each other through the mobile switching centres MSCa, MSCb. The mobile units A and B can move around the network, and establish communication through whichever of the base stations BSSa, BSSb, can provide the strongest radio signal for the present location of the mobile unit A, B.

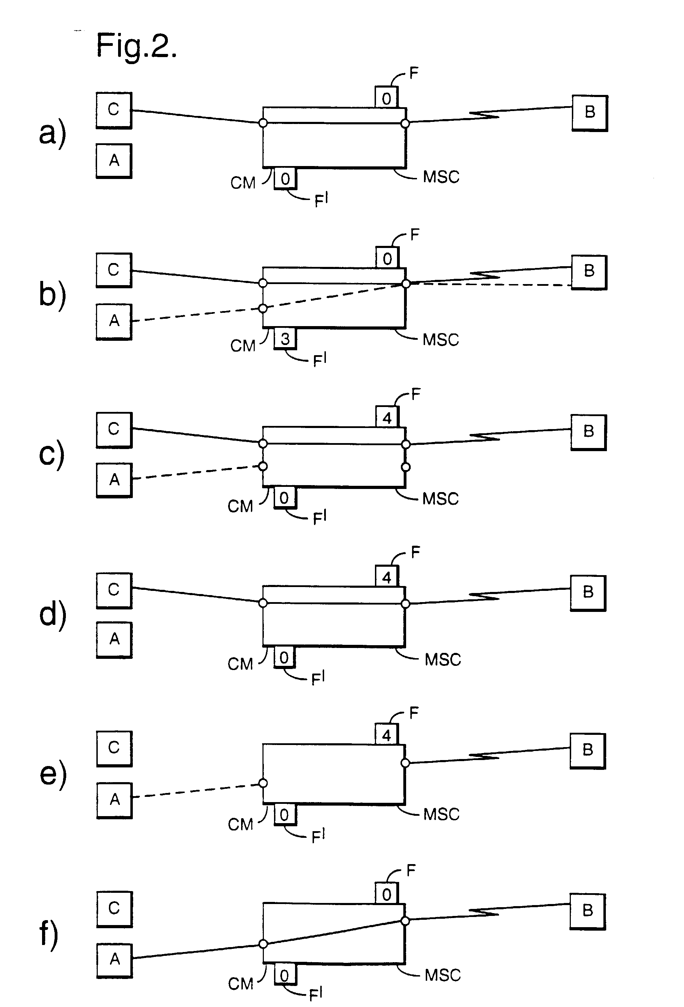

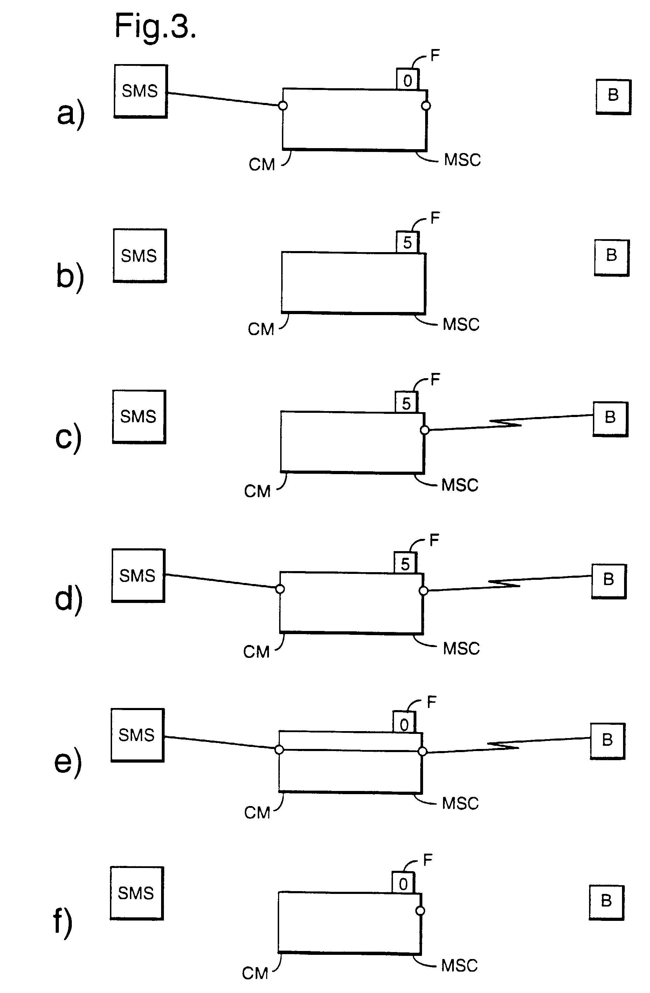

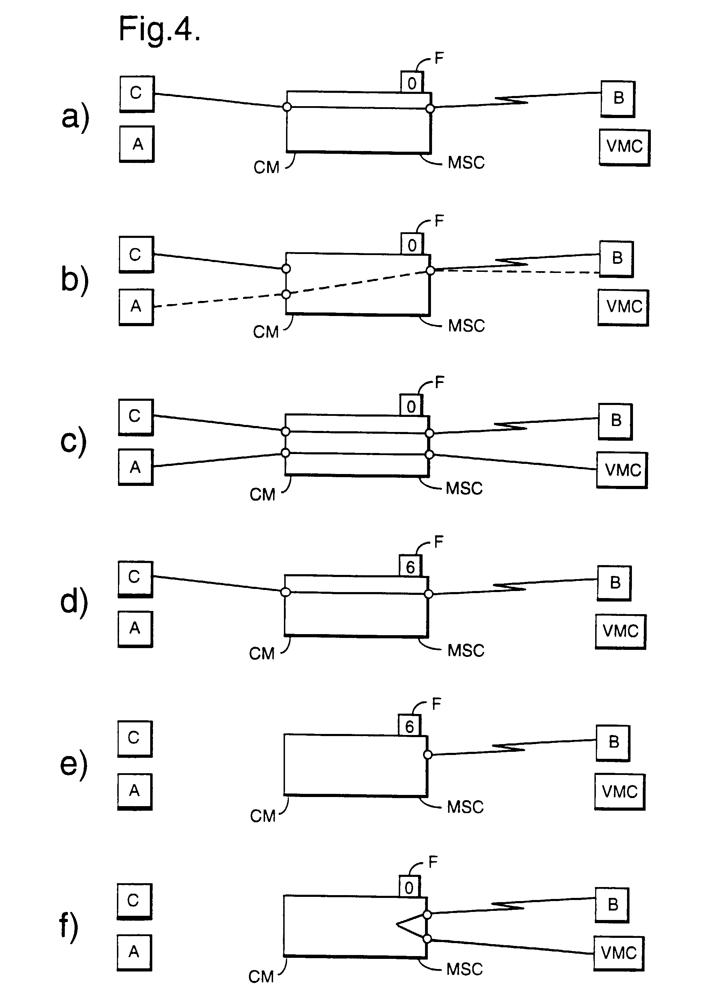

Figures 2, 3 and 4 each show six stages in the progress of the transaction management for three different services. For purposes of illustration users A,B,C are shown in these figures as working to the same mobile switching centre MSC, under the control of the same connection management system. Associated with the visitor location register VLR there are service state flag value indicators for each user; flag F relates to user B and flag F' relates to user A (not shown in figures 3 and 4) User C may also have a flag value indicator, but this plays no part in the illustrative examples and is not shown in the figures. Indeed, the user C may be a fixed terminal, connected to the MSC by way of the PSTN as shown in figure 1. The connection management system (CM) which is the central function of the mobile switching centre MSC, makes the various connections between the users A, B, C the short message service facility SMS and the voice message centre VMC. The term "connection management system" is used in this specification to describe the network entities show in Figure 1 and the communications protocols between them.

Figure 5 illustrates the transfer of these flag values from one visitor location register VLR1 to another, VLR2. The mobile user B, currently registered with a first visitor location register VLR1 associated with first mobile switching centre MSC1, is shown making contact with a second mobile switching centre MSC2. The mobile unit B has a permanent record with a home location register HLR. The mobile switching centres MSC1, MSC2 communicate with the home location register HLR to add and delete mobile units from their respective associated visitor location registers VLR1, VLR2. These embodiments utilise the concepts of protocol layers in line with the Open System Interconnection (OSI) principles to help manage complexity of large communications systems, as described in Section 58.2 of the Electronics Engineers Handbook (ed. FF Mazda, 6th Edition 1989: Butterworths Press)

Protocols are necessary for communications between the various entities defining the system. Protocols can be layered in accordance with the OSI principles, with each layer allocated particular functions, for example the Data Link layer (layer 2) provides transmission facilities making use of error detection and correction.

During a communication transaction between two network entities e.g. two terminals A, B, or a terminal and a service element e.g. a mobility management element, several protocol layers are involved. Each layer utilises services from lower layers to provide enhanced services to the layer above.

When the transactions between applications running in remote nodes finish, the communications facilities between the nodes are normally released in an orderly fashion. Each communication layer terminates its respective protocol relationship, starting with the highest protocol layer. Once all the protocol layers have cleared, communications connection is automatically released.

In the mobile environment the OSI layer 3 (network layer) is conveniently subdivided into three sub-levels; the highest sublevel being connection management (CM), the middle level being mobility management (MM) and the lowest level being radio resource (RR). These provide respectively the establishment and maintenance of end-to-end connections, the handling of movement of a mobile unit between base stations (handover and location update). and the maintenance of radio communication.

The invention allows the separation of release of the signalling connections associated with the Connection Management (CM) from those controlling Mobility Management (MM) entities. In particular, the release of the CM is separated from the release of the MM and lower layer connections. The release of the MM and the corresponding lower layers is managed by a control element or flag, referred to below as the Maintain Connection Indicator (MCI) flag. After a transaction at the CM layer has ended, for example at the end of a telephone call, the lower layers are not automatically released. The status of the MCI flag is used to determine if the signalling connection towards a Mobile Station (MS) is to be kept or released immediately. Depending on the status of the MCI flag different actions are taken in the network. The flag is under the control of a supervision timer referred as the Connection Maintained Protection (CMP) timer.

This technique of maintaining the MM connection for use by another transaction can be used to improve the quality of some services and to improve the network efficiency in supporting these services.

Maintain Connection Indicator (MCI) flags F stored in the Visitor Location Register VLR are used as a basis for decision making on whether to maintain an existing signalling connection with the mobile unit at the end of the current transaction, using the connection.

The operation of the system of Figure 1 in accordance with these protocols will now be described with reference of Figures 2, 3 and 4

The MCI variables represented by the flags F, F' can take several distinct values each indicating a different status. One of the values (zero) is used to indicate that the connection does not need to be kept and can be released immediately. The other values are used to indicate that a connection needs to be kept for use by other users. It is useful to supervise the connection to ensure that it is released (timed out) after a predetermined period if it is not used. This time-out would protect against any possible abnormal events. It may be useful to have different time-out values for different applications.

The MCI status, (flags F,F') could be coded taking two possible values; one indicating that the connection is to be released immediately; and the other indicating that the connection is to kept for other transaction. For each MCI status where a connection has to be kept, a connection maintained protection (CMP) timer can be associated with it. To provide flexibility four different timer values including zero are assignable for each MCI state in this example. The time will depend on associated service.

Table 1 sets out a possible coding system for the MCI status and the associated CMP timer using one octet.

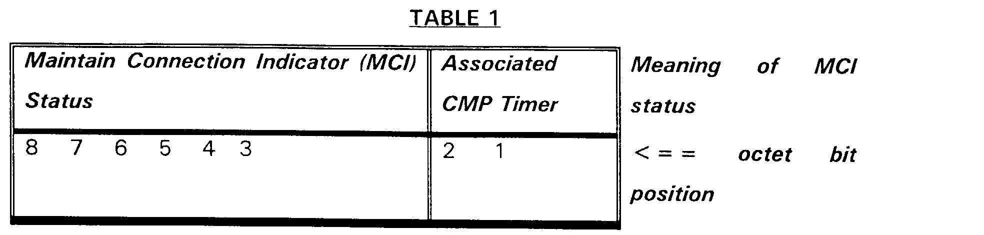

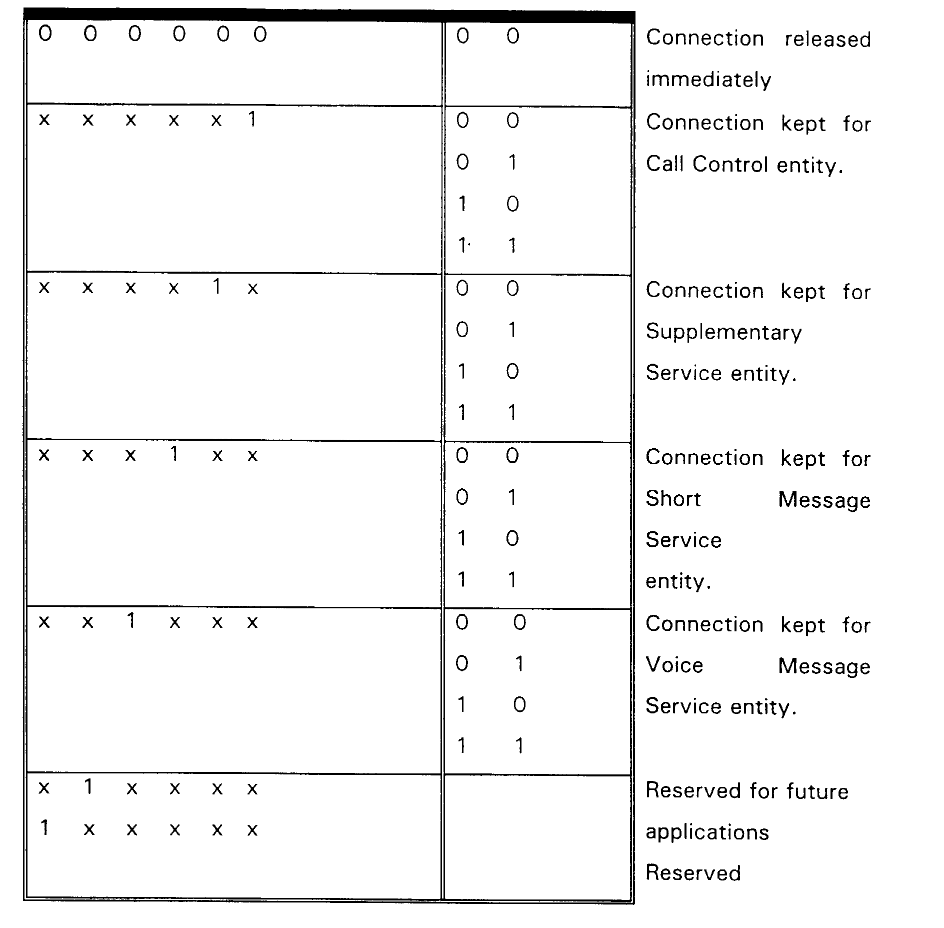

In this table "x" indicates that the status may be "0" or "1", the latter case indicating that a second entity is flagged. For example a status "1" in both position three and four (flags 3 and 4 both activated) indicates that connection is being kept for both the call control entity and the supplementary service entity. If this is the case the time-out value is the longest one corresponding to one of the flagged entities.

The connection is released if is not utilised before the timer expires.

At the end of a transaction such as a call, or a periodic location update, the signalling connection between the mobile unit B and mobile switching centre MSC is not released immediately. The status of the MCI flags is examined and, depending on the status of the MCI flags, different actions are taken in the network. If the status of all the MCI flags is zero, indicating that no new transaction are awaiting to use the existing connection, the connection is released by sending a Clear Command Message towards the Base Station System which in turn releases the radio connection to the mobile station B. After the response from the base station system BSS is received, the connection towards the base station system BSS is released in the normal way. If the status of an MCI flag F indicates that there are other transactions which could make use of the connection, the existing signalling connection to the mobile station B is not released. The connection is maintained for use by another transaction. A connection maintained protection (CMP) may be started to supervise the maintenance of the connection until its new transaction starts utilising the maintained connection. If a new transaction is aborted without utilising the maintained signalling connection, the signalling connection is released after the expiry of the CMP timer. In the examples below, only one MCI status flag is activated for a given user at any one time.

Figure 2 shows the procedure for the Call Completion to Busy Subscriber (CCBS) service. Initially (step a)) user B is in communication with user C. In step b) user A attempts to communicate with user B as shown by the dotted line. Since user B is busy the connection management system CM offers user A the CCBS function and a flag F' is set, indicating that the connection to the user A is to be maintained for a call control function allowing the connection to be used by user A to response to the offer of the CCBS facility. As described above, the flag values depend on the nature of the service. In this case the flag '3' is set, indicating a call control function. This flag is set to expire after a predetermined time-out period. If, during the currency of the flag F', the user A responds to the invitation to use the CCBS facility the connection management system CM is configured to monitor user B, and flag F is set(step c). This time the flag value is '4', indicating that a supplementary service has been requested. An acknowledgement is sent to the user A is indicate that the service has been activated, and to clear the flag F'.

The call between the users B and C continues (step d). When it finishes (step e), the condition of flag F causes the signalling connection from the mobile switching station to user B to be kept open for a short period determined by the flag value F and its associated timer. This allows the connection management system CM to alert user A to the availability of user B so that a call back can be carried out (step f) without the need to set up a completely new connection, including the allocation of a channel, between the mobile switching centre MSC and user B. The flag F is then reset to zero.

Whilst the Mobile Station (User B) is out of radio contact with the network, information related to the CCBS service and the MCI flag value remains stored in the VLR. When the user B next makes contact with the network, whether for a call-related transaction or for a call-independent transaction such as a location update, the stored information in the VLR is used to perform different actions in the network, for example, keeping the connection for use by other transactions. As will be described below, with reference to figure 5, the information may be transferred to a different VLR if the user B next makes contact with the MSC associated with this different VLR.

Figure 3 shows the procedure for the Short Message Service. Such services are used to indicate to a user that some action is required of him, such as retrieving messages from a voice message centre which have been received whilst the user has been out of contact, for example because he was out of range of a base station or had switched his terminal off. The Short Message facility may attempt to deliver a message towards user B at any time, but the user B may not be within radio contact when a message is to be delivered (step a). The SMS facility is alerted that the message has not been delivered to user B and the service centre stores the message for future delivery. In step b) the flag is set to indicate that a message is stored in the SMS facility. In step c) user B communicates with the network, e.g. to make a registration update or to make a call attempt. The MCI flag indicates that the link so established should be maintained to allow the message to be passed to the user B (step d)) In step e) the message is transmitted to user B and the flag value F reset to zero. When the message has been transmitted the connection to user B can be dropped (step f) immediately, if it is not being used by other transactions. Alternatively, it may be maintained for a further period to allow the user B to act on the message, for example to access the voice message centre.

Figure 4 shows an alternative procedure in which the Voice Message Centre itself initiates the response. In this example the user B is initially unavailable because he is engaged on another call. Initially (step a)) user B is in communication with user C. In step b) user A attempts to communicate with user B as shown by the dotted line. Since user B is busy the connection management system CM diverts the call from A to a voice message centre VMC. The flag F is set to value "6". The flag indicates that a message is held in the voice message centre VMC. In step e) the call between users B and C is terminated. However, in response to the condition of flag F the signalling connection from the mobile switching station to user B is kept open for a short period determined by the flag value F. This allows the connection management system CM to make voice message connection (step f) without the need to set up a completely new connection, including the allocation of a channel, between the mobile switching centre MSC and user B.

It should be noted that in current cellular systems, if a mobile unit is handed over between two base stations controlled by different switching centres during a transaction, control of the transaction remains with the switching centre controlling the original base station, although the call is now routed from it by way of the other switching centre. When the connection is eventually released a location update is performed which results in control passing to the other switching centre. This avoids problems which might arise during a call if different switching centres operate in slightly different ways. Therefore, in the embodiments described, if an MCI flag is set requiring the connection to be maintained at the end of a transaction, any subsequent transaction using that connection will also be controlled by the first switching centre. The switching centres could belong to the same or different operators, but in practice the administrative difficulties of apportioning costs and of billing have so far precluded roaming to a different network during the course of a call.

The system for transferring flag values according to the invention of the Applicant's co-pending application referred to above will now be described with reference to Figure 5.

The user B is initially registered with the visitor location register VLR1. The user B then makes contact with the mobile switching centre MSC2 by transmitting a signal S to make a call, or for some other transaction such as a registration update (e.g. when the user first switches the unit on). Such non-call-related transactions only require the use of a signalling connection and not a full traffic-bearing link as required for a call-related transaction. This "location update" may take place at any time that a call is not in progress, for example when the user switchyes the mobile unit on, or initiates a call attempt, or as a result of an automatic update process carried out periodically when the unit is switched on but not in use (in "standby mode"). If the mobile unit moves to the control area of a different switching centre during the progress of a call the location upodate takes place when the connection is eventually released, as described above.

Both visitor location registers VLR1 and VLR2 need to be updated to reflect that the user B has moved to the service area of the new mobile switching centre MSC2. The signal S is detected at the mobile switching centre MSC2 which then transmits a Location Update signal LU to the Home Location Register HLR, using the Mobile Application Part (MAP) protocol of GSM. The home location register HLR transmits a Cancel Location message CL to the old mobile switching centre MSC1. Thus far the process follows standard GSM location update protocols. However, unlike the standard protocol, when the Cancel Location signal is detected at the previous mobile switching centre MSC1, call context information F for the user B is transferred to the new visitor location centre VLR2. The transfer is made through the home location register HLR of user B. The new visitor location register VLR2 processes the call context information including the flag information F in the same way as the first visitor location register VLR1. Thus the use of B will receive the same benefits at the new mobile switching centre MSC2.

In the event that the new mobile switching centre MSC2 is unable to support one or more of the services, the data for such services, (F1) is stored in a buffer register in the home location register (HLR) until the user next makes contact with the first mobile switching centre MSC1 or some other mobile switching centre capable of supporting the service. Similarly, if such data F2 is already held in the buffer register as a result of a previous transfer and the new mobile switching centre MSC2 is capable of supporting the service to which the data F2 relates (the current MSC mobile switching centre MSC1 being incapable of doing so), such data F2 is forwarded from the buffer register to the new mobile switching centre MSC2 for storing in its visitor location register VLR2.

The embodiments described above are described in relation to a cellular radio system. However, similar principles are applicable to other telecommunications systems.

## Claims

1. A telecommunications switching system for selectively interconnecting a plurality of network terminals, the switching system being arranged to establish communications links with individual network terminals so that transactions can be established to or from the terminals, and to release the communications links upon termination of the said transactions;
characterised in that the switching system includes indicating means (F) for each terminal, the indicating means being settable in response to activity by, or relating to, the respective terminal (B);
the switching system being responsive to the setting of the indicating means (F) to prevent release of all or part of a communications link;
such that a further transaction can be made to or from the respective terminal (B) using the same communications link or part thereof.

2. A telecommunications switching system according to Claim 1, comprising timer means for causing the communications link to be released after a predetermined delay period.

3. A telecommunications switching system according to Claim 2, wherein the settable indicating means (F) indicates the type of further transaction to be made, and the delay period of the timer means is selectable according to the type of transaction indicated.

4. A telecommunications switching system according to claim 2 or claim 3, comprising means for maintaining a communications link for a further predetermined delay period after termination of such further transaction to the terminal (B), in order to allow a further transaction to be initiated from the terminal.

5. A telecommunications switching system according to any preceding claim, associated with a message facility (VMC) for storing messages to a first terminal (B) when a connection to the first terminal cannot be established, wherein the indicating means (F) is settable in response to a message being stored in the message facility (VMC).

6. A telecommunications switching system according to claim 5 wherein the message facility (VMC) includes means for storing voice messages.

7. A telecommunications switching system according to claim 5 or 6 wherein the message facility (VMC) includes means for storing text messages.

8. A telecommunications switching system according to any preceding claim, having settable signalling means (F') for signalling to a second network terminal (A) that a first network terminal (A) has completed a transaction, the signalling and indicating means (F, F') being settable in response to a transaction attempt by said second terminal (A) to said first network terminal (B).

9. A telecommunications switching system according to any preceding claim, comprising a plurality of switching centres for establishing communication links with one or more network terminals, so that a network terminal (B) can establish a communication link through different switching centres at different times, at least a first and a second of the switching centres having register means (VLR1, VLR2) to store the settings of the indicator means (F), and means for transferring the settings from the register means (VLR1) of the first switching centre to the register means of the second switching centre (VLR2) when communication with the network terminal (B) is transferred from the first switching centre to the second switching centre.

10. A telecommunications switching system according to claim 9, having a buffer register (HLR) for storing the settings from the register (VLR1) of the first switching centre, in the event that communication with a network terminal (B) is first transferred to a further switching centre not having a register capable of storing the settings, and means for transmitting the settings stored in the buffer register (HLR) to the register of the second switching centre (VLR2) when communication with the network terminal (B) is transferred to said second switching centre.

11. A telecommunications switching system according to any preceding claim, configured for use in a cellular radio system.

12. A method of operating a telecommunications system for selectively interconnecting a plurality of network terminals by establishing and releasing communications links with individual network terminals so that transactions can take place between the terminals; characterised in that
if switching activity takes place during a transaction by, or relating to, a terminal (B), such activity being indicative of a further transaction by, or relating to, the same terminal, to be attempted when the current transaction is completed, indicating means (F) are set in response to such activity; and wherein
at the end of a transaction, release of all or part of the communications link used by the transaction is controlled in response to the settings of the indicating means (F), such that the release is prevented and the further transaction can be made using the same communications link or part thereof.

13. A method according to Claim 12, wherein the link is maintained for a predetermined delay period.

14. A method according to Claim 13, wherein the delay period is selected according to the type of further transaction to be made.

15. A method according to claim 13 or 14 wherein the link is maintained for a further predetermined delay period after a further transaction to the terminal (B), in order to allow a yet further transaction to be initiated from the terminal.

16. A method according to any of Claims 12 to 15, wherein the communication link is maintained if a message to the first network terminal (B) is stored in a message facility (VMC).

17. A method according to any of Claims 12 to 16, wherein the link is maintained in response to a transaction attempt from a second terminal (A).

18. A method according to Claim 17, wherein a signal is sent to the second terminal (A) when the first transaction ends.

19. A method according to any of claims 12 to 18, in which network terminals can establish communication links with different switching centres at different times, and in which the indicating means (F) are associated with respective switching centres, wherein when communication with a network terminal (B) is transferred from a first switching centre to a second switching centre the setting of the indicating means (F) associated with the first switching centre is transmitted to the indicating means (F) associated with the second switching centre.

20. A method according to claim 19, wherein if communication with a network terminal (B) is first transferred to a further switching centre not having an associated indicating means capable of storing the setting, the setting is stored in a buffer register (HLR), and when communication with the network terminal (B) is transferred to the second switching centre, the setting is transmitted to the indicating means (F) associated with said second switching centre.

21. A method according to any of claims 12 to 20, wherein the telecommunications system is a cellular radio system.

## Patentansprüche

1. Telekommunikationsvermittlungssystem für die wahlweise Zusammenschaltung mehrerer Netzterminals, wobei das Vermittlungssystem so beschaffen ist, daß es Kommunikationsverbindungen mit einzelnen Netzterminals erstellt, so daß Transaktionen an die Terminals oder von diesen ausgeführt werden können, und daß es die Kommunikationsverbindungen am Ende der Transaktionen aufgibt;
dadurch gekennzeichnet, daß das Vermittlungssystem Anzeigeeinrichtungen (F) für jedes Terminal enthält, die als Antwort auf eine durch das entsprechende Terminal (B) ausgeführte oder auf dieses bezogene Aktivität gesetzt werden können;
wobei das Vermittlungssystem auf die Setzung der Anzeigeeinrichtungen (F) anspricht, um eine Aufgabe der gesamten Kommunikationsverbindung oder eines Teils hiervon zu verhindern;
so daß eine weitere Transaktion an das entsprechende Terminal (B) oder von diesem unter Verwendung derselben Kommunikationsverbindung oder eines Teils hiervon ausgeführt werden kann.

2. Telekommunikationsvermittlungssystem nach Anspruch 1, mit einer Zeitgebereinrichtung, die bewirkt, daß die Kommunikationsverbindung nach einer vorgegebenen Verzögerungsperiode aufgegeben wird.

3. Telekommunikationsvermittlungssystem nach Anspruch 2, wobei die setzbaren Anzeigeeinrichtungen (F) den Typ der auszuführenden weiteren Transaktion angeben und die Verzögerungsperiode der Zeitgebereinrichtung entsprechend dem Typ der angegebenen Transaktion wählbar ist.

4. Telekommunikationsvermittlungssystem nach Anspruch 2 oder Anspruch 3, mit einer Einrichtung, die eine Kommunikationsverbindung für eine weitere vorgegebene Verzögerungsperiode nach Beendigung einer solchen weiteren Transaktion an das Terminal (B) aufrechterhält, um den Beginn einer weiteren Transaktion vom Terminal zuzulassen.

5. Telekommunikationsvermittlungssystem nach irgendeinem vorangehenden Anspruch in Verbindung mit einer Nachrichtenvorrichtung (VMC) zum Speichern von Nachrichten für ein erstes Terminal (B), wenn eine Anschaltung an das erste Terminal nicht erstellt werden kann, wobei die Anzeigeeinrichtungen (F) als Antwort auf eine in der Nachrichtenvorrichtung (VMC) gespeicherte Nachricht gesetzt werden können.

6. Telekommunikationsvermittlungssystem nach Anspruch 5, wobei die Nachrichtenvorrichtung (VMC) eine Einrichtung zum Speichern von Sprachnachrichten enthält.

7. Telekommunikationsvermittlungssystem nach Anspruch 5 oder 6, wobei die Nachrichtenvorrichtung (VMC) eine Einrichtung zum Speichern von Textnachrichten enthält.

8. Telekommunikationsvermittlungssystem nach irgendeinem vorangehenden Anspruch, mit einer setzbaren Melde-einrichtung (F'), die einem zweiten Netzterminal (A) meldet, daß ein erstes Netzterminal (B) eine Transaktion abgeschlossen hat, wobei die Melde- und Anzeigeeinrichtungen (F, F') als Antwort auf einen Transaktionsversuch durch das zweite Terminal (A) an das erste Terminal (B) gesetzt werden können.

9. Telekommunikations-Vermittlungssystem nach irgendeinem vorangehenden Anspruch, mit mehreren Vermittlungszentralen für die Erstellung von Kommunikationsverbindungen mit einem oder mit mehreren Netzterminals, so daß ein Netzterminal (B) eine Kommunikationsverbindung über verschiedene Vermittlungszentralen zu unterschiedlichen Zeiten erstellen kann, wobei wenigstens eine erste und eine zweite der Vermittlungszentralen eine Registereinrichtung (VLR1, VLR2) besitzt, um die Setzungen der Angabeeinrichtungen (F) zu speichern, und einer Einrichtung zum Übertragen der Setzungen von der Registereinrichtung (VLR1) der ersten Vermittlungszentrale an die Registereinrichtung der zweiten Vermittlungszentrale (VLR2), wenn eine Kommunikation mit dem Netzterminal (B) von der ersten Vermittlungszentrale an die zweite Vermittlungszentrale übertragen wird.

10. Telekommunikationsvermittlungssystem nach Anspruch 9, mit einem Pufferregister (HLR) zum Speichern der Setzungen vom Register (VLR1) der ersten Vermittlungszentrale, falls die Kommunikation mit einem Netzterminal (B) zunächst an eine weitere Vermittlungszentrale übertragen wird, die kein Register besitzt, das die Setzungen speichern kann, und einer Einrichtung zum Übertragen der im Pufferregister (HLR) gespeicherten Setzungen an das Register der zweiten Vermittlungszentrale (VLR2), falls eine Kommunikation mit dem Netzterminal (B) an die zweite Vermittlungszentrale übertragen wird.

11. Telekommunikationsvermittlungssystem nach irgendeinem vorangehenden Anspruch, das so beschaffen ist, daß es in einem Zellenfunksystem verwendet werden kann.

12. Verfahren zum Betreiben eines Telekommunikations-systems zum wahlweisen Zusammenschalten mehrerer Netzterminals durch Erstellen und Aufgeben von Kommunikationsverbindungen mit einzelnen Netzterminals, so daß Transaktionen zwischen den Terminals stattfinden können; dadurch gekennzeichnet, daß,
falls eine Aktivität während einer Transaktion durch ein Terminal (B) oder in bezug auf dieses stattfindet, wobei eine solche Aktivität bei Abschluß der momentanen Transaktion den Versuch einer weiteren Transaktion durch dasselbe Terminal oder in bezug auf dieses angibt, Anzeigeeinrichtungen (F) als Antwort auf eine solche Aktivität gesetzt werden; und wobei
am Ende einer Transaktion die Aufgabe der gesamten von der Transaktion verwendeten Kommunikationsverbindung oder eines Teils hiervon als Antwort auf die Setzungen der Anzeigeeinrichtungen (F) in der Weise gesteuert wird, daß die Aufgabe verhindert wird und eine weitere Transaktion unter Verwendung derselben Kommunikationsverbindung oder eines Teils hiervon ausgeführt werden kann.

13. Verfahren nach Anspruch 12, wobei die Verbindung für eine vorgegebene Verzögerungsperiode aufrechterhalten wird.

14. Verfahren nach Anspruch 13, wobei die Verzögerungsperiode entsprechend dem Typ der auszuführenden weiteren Transaktion gewählt wird.

15. Verfahren nach Anspruch 13 oder 14, wobei die Verbindung für eine weitere vorgegebene Verzögerungsperiode nach einer weiteren Transaktion an das Terminal (B) aufrechterhalten wird, um den Beginn einer nochmals weiteren Transaktion vom Terminal zuzulassen.

16. Verfahren nach irgendeinem der Ansprüche 12 bis 15, wobei die Kommunikationsverbindung aufrechterhalten wird, falls eine Nachricht an das erste Netzterminal (B) in einer Nachrichtenvorrichtung (VMC) gespeichert ist.

17. Verfahren nach irgendeinem der Ansprüche 12 bis 16, wobei die Verbindung als Antwort auf einen Transaktionsversuch von einem zweiten Terminal (A) aufrechterhalten wird.

18. Verfahren nach Anspruch 17, wobei an das zweite Terminal (A) ein Signal gesendet wird, wenn die erste Transaktion endet.

19. Verfahren nach irgendeinem der Ansprüche 12 bis 18, bei dem Netzterminals Kommunikationsverbindungen mit unterschiedlichen Vermittlungszentralen zu unterschiedlichen Zeiten erstellen können und bei dem die Anzeigeeinrichtungen (F) jeweiligen Vermittlungszentralen zugeordnet sind, wobei dann, wenn eine Kommunikation mit einem Netzterminal (B) von einer ersten Vermittlungszentrale an eine zweite Vermittlungszentrale übertragen wird, die Setzung der Anzeigeeinrichtungen (F), die der ersten Vermittlungszentrale zugeordnet sind, an die Anzeigeeinrichtungen (F), die der zweiten Vermittlungszentrale zugeordnet sind, übertragen wird.

20. Verfahren nach Anspruch 19, wobei, falls eine Kommunikation mit einem Netzterminal (B) zunächst an eine weitere Vermittlungszentrale übertragen wird, das keine zugeordneten Anzeigeeinrichtungen besitzt, die die Setzung speichern können, diese Setzung in einem Pufferregister (HLR) gespeichert wird, und dann, wenn eine Kommunikation mit dem Netzterminal (B) an die zweite Vermittlungszentrale übertragen wird, die Setzung an die Anzeigeeinrichtungen (F), die der zweiten Vermittlungszentrale zugeordnet sind, übertragen wird.

21. Verfahren nach irgendeinem der Ansprüche 12 bis 20, wobei das Telekommunikationssystem ein Zellenfunksystem ist.

## Revendications

1. Système de commutation de télécommunications pour interconnecter sélectivement une pluralité de terminaux du réseau, le système de commutation étant agencé pour établir des liaisons de communication avec des terminaux individuels du réseau de sorte que des transactions puissent être établies vers ou depuis les terminaux, et pour libérer les liaisons de communication à la fin desdites transactions ;
caractérisé en ce que le système de commutation comprend des moyens d'indication (F) pour chaque terminal, les moyens d'indication pouvant être réglés en réponse à l'activité du terminal respectif (B) ou le concernant ;
le système de commutation pouvant répondre au réglage des moyens d'indication (F) pour éviter la libération de toute ou une partie d'une liaison de communication ;
de sorte qu'une transaction supplémentaire peut être menée vers ou depuis le terminal respectif (B) en utilisant la même liaison de communication ou une partie de celle-ci.

2. Système de commutation de télécommunications selon la revendication 1, comprenant des moyens de minuteur pour provoquer la libération de la liaison de communication après écoulement d'un laps de temps prédéterminé.

3. Système de commutation de télécommunications selon la revendication 2, dans lequel les moyens d'indication réglables (F) indiquent le type de la transaction supplémentaire à effectuer, et le laps de temps des moyens de minuteur peut être sélectionné en fonction du type de transaction indiqué.

4. Système de commutation de télécommunications selon la revendication 2 ou 3, comprenant des moyens pour maintenir une liaison de communication pendant un laps de temps prédéterminé supplémentaire à la fin de cette transaction supplémentaire au terminal (B) , afin de permettre qu'une autre transaction soit initiée depuis le terminal.

5. Système de commutation de télécommunications selon l'une quelconque des revendications précédentes, associé à un serveur de messagerie (VMC) pour stocker des messages destinés à un premier terminal (B) lorsqu'une connexion avec le premier terminal ne peut pas être établie, dans lequel les moyens d'indication (F) peuvent être réglés en réponse à la présence d'un message stocké dans le serveur de messagerie (VMC).

6. Système de commutation de télécommunications selon la revendication 5, dans lequel le serveur de messagerie (VMC) comprend des moyens pour stocker des messages vocaux.

7. Système de commutation de télécommunications selon la revendication 5 ou 6, dans lequel le serveur de messagerie (VMC) comprend des moyens pour stocker des messages de texte.

8. Système de commutation de télécommunications selon l'une quelconque des revendications précédentes, ayant des moyens de signalisation réglables (F') pour indiquer à un deuxième terminal du réseau (A) qu'un premier terminal du réseau (B) a terminé une transaction, les moyens d'indication et de signalisation (F, F') pouvant être réglés en réponse à une tentative de transaction par ledit deuxième terminal (A) vers ledit premier terminal du réseau (B).

9. Système de commutation de télécommunications selon l'une quelconque des revendications précédentes, comprenant une pluralité de centres de commutation pour établir des liaisons de communication avec un ou plusieurs terminaux du réseau, de manière à ce qu'un terminal d'un réseau (B) puisse établir une liaison de communication par l'intermédiaire de différents centres de commutation à des moments différents, au moins un premier et un deuxième des centres de commutation ayant des moyens de registre (VLR1, VLR2) pour stocker les réglages des moyens d'indication (F), et des moyens pour transférer les réglages des moyens de registre (VLR1) du premier centre de commutation aux moyens de registre du deuxième centre de commutation (VLR2) lorsque la communication avec le terminal du réseau (B) est transférée du premier centre de commutation au deuxième centre de commutation.

10. Système de commutation de télécommunications selon la revendication 9, ayant un registre tampon (HLR) pour stocker les réglages provenant du registre (VLR1) du premier centre de commutation, dans le cas où la communication avec un terminal du réseau (B) est tout d'abord transférée à un autre centre de commutation n'ayant pas de registre capable de stocker les réglages, et des moyens pour transmettre les réglages stockés dans le registre tampon (HLR) au registre du deuxième centre de commutation (VLR2) lorsque la communication avec le terminal du réseau (B) est transférée audit deuxième centre de commutation.

11. Système de commutation de télécommunications selon l'une quelconque des revendications précédentes, configuré pour une utilisation dans un système de radiotéléphone cellulaire.

12. Procédé pour opérer un système de télécommunications pour interconnecter sélectivement une pluralité de terminaux du réseau en établissant et en libérant des liaisons de communication avec des terminaux individuels du réseau de manière à ce que des transactions puissent avoir lieu entre les terminaux ;
caractérisé en ce que
si l'activité de commutation se déroule pendant une transaction émanant d'un terminal (B), ou le concernant, cette activité indiquant qu'une transaction supplémentaire par le même terminal, ou le concernant, est à tenter lorsque la transaction courante est terminée, les moyens d'indication (F) sont réglés en réponse à cette activité ; et dans lequel
à la fin d'une transaction, la libération de tout ou une partie de la liaison de communication utilisée par la transaction est contrôlée en réponse aux réglages des moyens d'indication (F), de sorte que la libération soit empêchée et que la transaction supplémentaire puisse être faite en utilisant la même liaison de communication ou une partie de celle-ci.

13. Procédé selon la revendication 12, dans lequel la liaison est maintenue pendant un laps de temps prédéterminé.

14. Procédé selon la revendication 13, dans lequel le laps de temps est sélectionné en fonction du type de transaction supplémentaire à effectuer.

15. Procédé selon la revendication 13 ou 14, dans lequel la liaison est maintenue pendant un laps de temps prédéterminé supplémentaire après une transaction supplémentaire vers le terminal (B), afin de permettre qu'encore une autre transaction soit initiée depuis le terminal.

16. Procédé selon l'une quelconque des revendications 12 à 15, dans lequel la liaison de communication est maintenue si un message destiné au premier terminal du réseau (B) est stocké dans un serveur de messagerie (VMC).

17. Procédé selon l'une quelconque des revendications 12 à 16, dans lequel la liaison de communication est maintenue en réponse à une tentative de transaction provenant d'un deuxième terminal (A).

18. Procédé selon la revendication 17, dans lequel un signal est envoyé au deuxième terminal (A) lorsque la première transaction se termine.

19. Procédé selon l'une quelconque des revendications 12 à 18, dans lequel des terminaux du réseau peuvent établir des liaisons de communication avec différents centres de commutation à des moments différents, et dans lequel les moyens d'indication (F) sont associés à des centres de commutation respectifs, dans lequel, lorsque la communication avec un terminal du réseau (B) est transférée d'une premier centre de commutation à un deuxième centre de commutation, le réglage des moyens d'indication (F) associés au premier centre de commutation est transmis aux moyens d'indication (F) associés au deuxième centre de commutation.

20. Procédé selon la revendication 19, dans lequel si la communication avec un terminal du réseau (B) est tout d'abord transférée à un autre centre de commutation n'ayant pas de moyens d'indication associés capables de stocker le réglage, le réglage est stocké dans un registre tampon (HLR), et lorsque la communication avec le terminal du réseau (B) est transférée au deuxième centre de commutation, le réglage est transmis aux moyens d'indication associés (F) audit deuxième centre de commutation.

21. Procédé selon l'une quelconque des revendications 12 à 20, dans lequel le système de télécommunications est un système radiocellulaire.
